# EUROPEAN PATENT SPECIFICATION

(11) **EP 0 498 639 B1**
(45) Date of publication and mention of the grant of the patent: **22.05.1996**
(21) Application number: 92300979.9
(22) Date of filing: 05.02.1992
(51) Int. Cl.: A23N 17/02, A01F 29/00

(54) **An apparatus for washing or chopping or mixing or dispensing material**
Apparat zum Reinigen oder Hacken oder Mischen oder Verteilen von Material
Appareil pour laver ou hacher ou mélanger ou distribuer du matériel

(30) Priority: 06.02.1991 IE 40091
(43) Date of publication of application: 12.08.1992
(73) Proprietor: Northington Limited, Bagnelstown, County Carlow (IE)
(72) Inventor: Corcoran, John, Carlow, County Carlow (IE)
(74) Representative: Casey, Lindsay Joseph

(56) References cited:
- EP-A- 0 307 159
- CH-A- 664 256

## Description

This invention relates to an apparatus for washing or mixing or chopping or dispensing material. The invention has a particular application for chopping root crops such as sugar beet, fodder beet or the like and for dispensing the chopped crop to a feeding trough or container. The invention can also be used for transferring pressed beet pulp to a feeding trough or container.

An apparatus according to the pre-characterising part of claim 1 is described in Swiss Patent Specification CH-A-664256. However, a disadvantage of such apparatus is that it is limited to discharging its material onto a conveyor belt which then transports the material sideways away from the discharge outlet. This makes the machine expensive, cumbersome and limits the range of situations in which it can be used.

It is an object of the present invention to provide an apparatus of the kind defined in the pre-characterising part of claim 1 which permits the material to be discharged clear of the apparatus without the use of a conveyor.

This object is achieved by the features set out in the characterising part of claim 1.

Several embodiments of the invention will now be described, by way of example, with reference to the accompanying drawings, in which:
Figure 1 is a side view of a first embodiment of an apparatus according to the invention attached to a conventional tractor;
Figure 2 is a side view of the first embodiment of the an apparatus according to the invention;
Figure 3 is a front view of the apparatus of Figure 2 of the drawings;
Figure 4 is a rear view of the apparatus of Figure 2 of the drawings;
Figure 5 is a front view of a chopping mechanism (excluding knives) of the first embodiment of the apparatus according to the invention;
Figure 6 is a section along line 6-6 of Figure 5 of the drawings;
Figure 7 is a section along line 7-7 of Figure 5 of the drawings (including a knife);
Figure 8 is a front view of a second embodiment of an apparatus according to the invention;
Figure 9 is a side view of a third embodiment of an apparatus according to the invention in a loading position;
Figure 10 is a side view of the third embodiment of the apparatus according to the invention in an operative position;
Figure 11 is a perspective view of a device according to the invention for attaching the apparatus according to the invention to a tractor;
Figure 12 is a side view of an assembly for use with a second embodiment of the apparatus according to the invention;
Figure 13 is a side view of a second assembly to clean and chop the root crop including a device according to the invention for attaching a root chopper to a tractor;
Figure 14 is a side view of the assembly of Figure 13 (attachment device omitted);
Figure 15 is a rear view of the assembly of Figure 13 (attachment device omitted);
Figure 16 is a longitudinal sectional view of the assembly of Figure 13;
Figure 17 is a schematic transverse sectional view of the drive means of the assembly of Figure 13; and
Figure 18 is a longitudinal sectional view of the chopping mechanism of the assembly of Figure 13.

In the drawings, similar numerals have been used to indicate like parts.

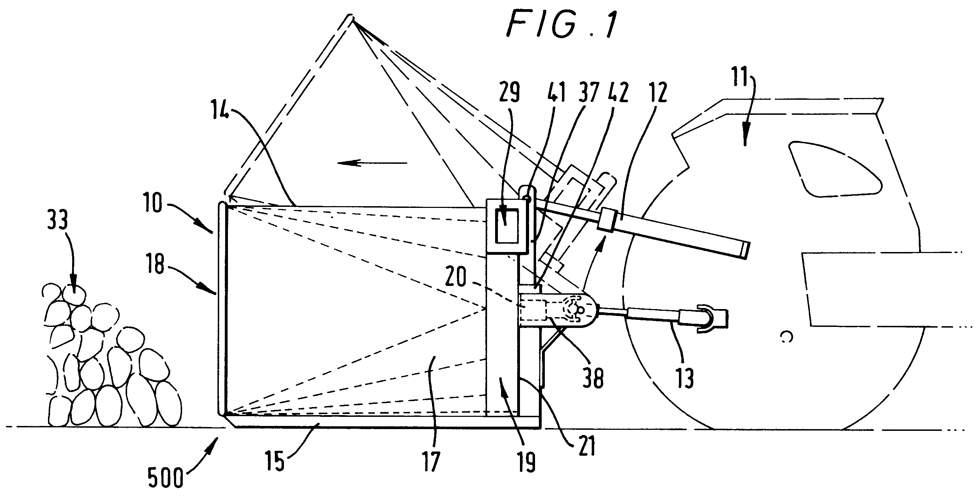

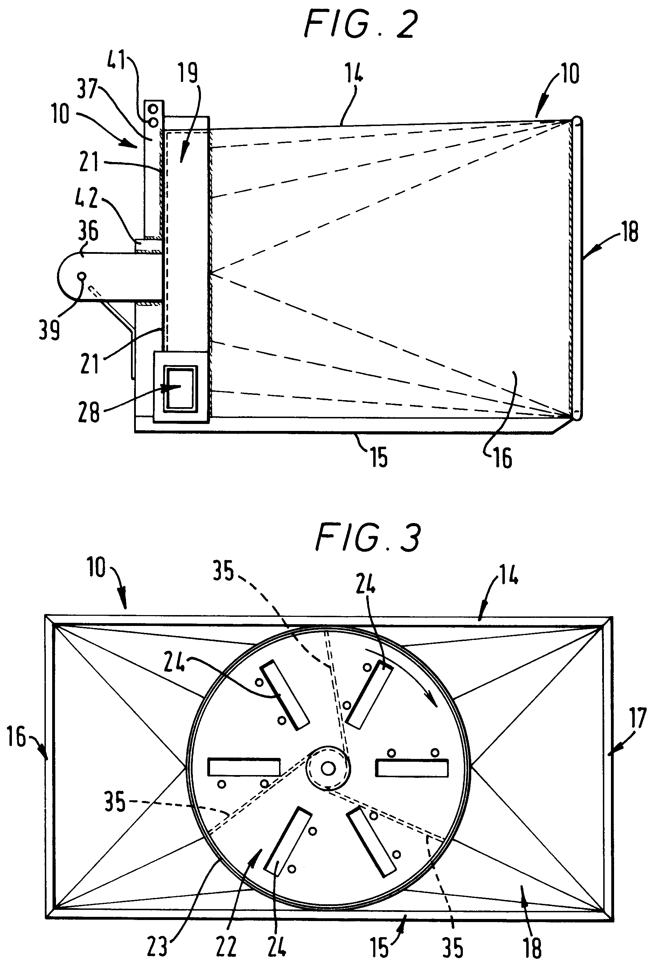

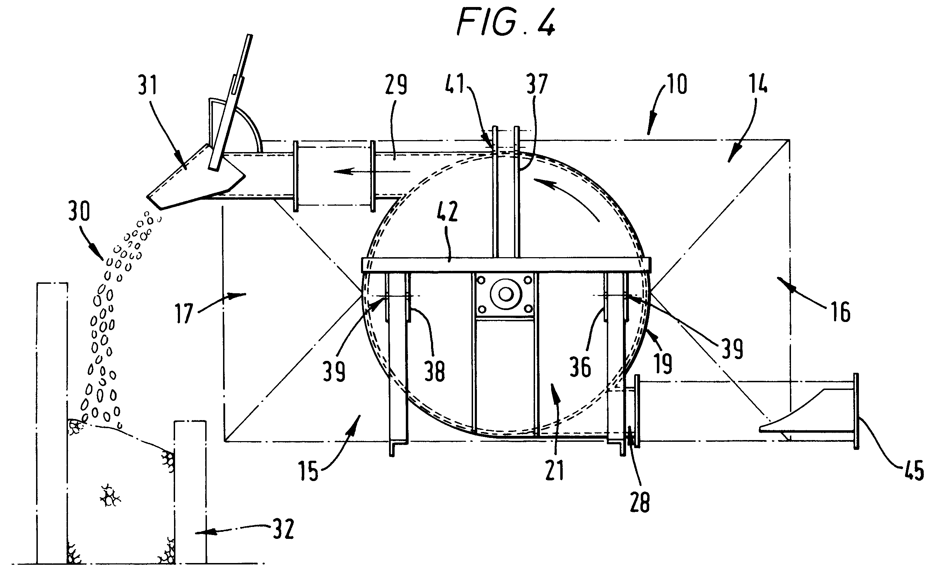

Referring now to the drawings and in particular to Figures 1 to 7, there is illustrated a first embodiment of an apparatus 500 according to the invention. The apparatus is connected to a tractor 11 by a conventional three point linkage comprising a hydraulic ram 12 and two lift links 13. The apparatus includes a housing or hopper 10 which comprises a first wall 14, a second wall 15, a third wall 16 and a fourth wall 17, all the internal faces of which are inclined inwardly and downwardly from an open mouth 18 to base 21.

A shaft 20 is mounted in the base 21 upon which shaft 20 a floor is mounted in parallel spaced apart relationship relative to the base 21. The shaft 20 is operatively connected to the power take off or to a hydraulic motor (not shown) of the tractor 11.

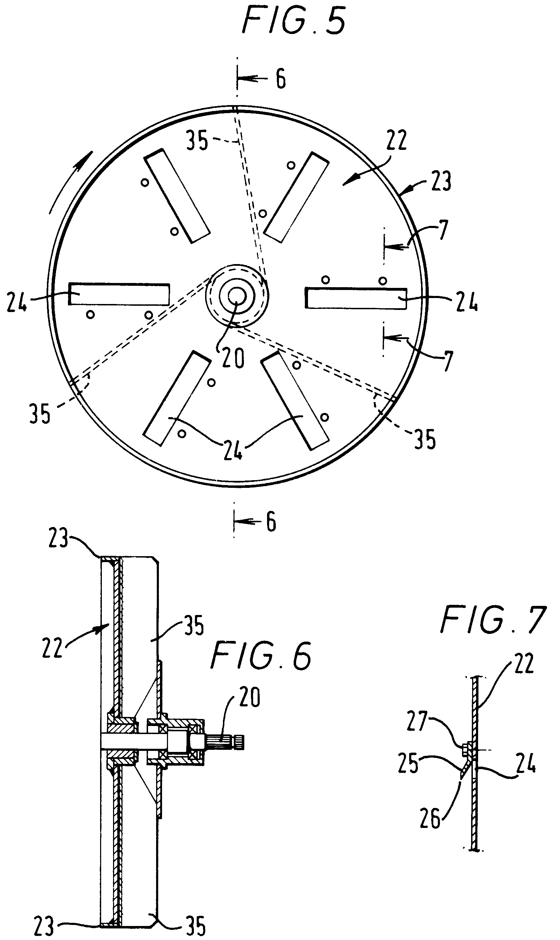

The floor consists of a metal disc 22 having a circumferentially located upright rim 23 and having a plurality of spaced apart rectangular apertures 24 which are radially arranged about the disc 22. Each aperture 24 has a knife 25, with a cutting edge 26, projecting partially over the aperture 24. Each knife 25 is mounted on the surface of the disc 22 distal the base 21 by a conventional nut and bolt arrangement 27 as illustrated in Figure 7.

It will be appreciated that the knives 25 may be changed or removed depending on the requirements of the apparatus 500. The angle between the knife 25 and the disc 22 can be changed by inserting a tapered or wedge-shaped spacer between the knife 25 and the disc 22 (not shown).

Alternatively, a respective adjustable knife (not shown) may be mounted on the surface of the disc 22 proximal the base 21. In this case, the portion of the adjustable knife distal the cutting edge is curved and terminates in a thickened portion, which is of substantially hexagonal cross-section. The thickened portion extends beyond each end of the adjustable knife. Each free end of the thickened portion is located in an eye mounted on the surface of the disc 22 proximal of the base 21, the eyes being dimensioned to permit rotatable movement of the thickened portion within the eyes. The edge of the aperture 24 adjacent where the knife is mounted, is inclined towards the knife. The adjustable knife has at least one hole adjacent its cutting edge. The adjustable knife is moved from an open to a closed position by inserting a bar into the hole so as to rotate the free ends of the thickened portion of the adjustable knife within the eyes on the chopping mechanism to the desired position. The adjustable knife is held in the desired position by a spring steel plate clamp which engages against a side of the free end of the thickened portion. The clamp is mounted on the surface of the disc 22 proximal the base 21. When not used for chopping, the adjustable knife can be moved to the closed position so as to blank the aperture 24.

The metal disc 22 serves to compartmentalise the hopper 10 into a first or upper compartment having the mouth 18 therein and a second or compartment having the base 21 therein.

The disc 22 may have a diameter in the range of from two-three feet (600mm-900mm). A disc 22 having a having a diameter of about two feet (600mm) is suitable for use in a sheep shed with narrow feeding passages, whereas a disc 22 having a diameter of three feet (900mm) would have a higher output and is suitable for use in a cattle shed. In either case, the output of the apparatus 500 can be reduced by removing some of the knives 25.

Alternatively, two discs 22 may be fitted in side-by-side relationship. If desired, the hopper 10 may be fitted with an adjustable cover (not shown) partially mounted over the chopping disc or discs 22 which would serve to cut off the intake of disc 22 and so regulate the discharge output. This would reduce the horsepower required to operate the apparatus 500 which would be advantageous in the feeding of sheep, which do not require as much feed as cattle.

The hopper 10 is provided with two discharge outlets 28, 29 in communication with the lower compartment and located in the side walls 16 and 17, respectively. The discharge outlets 28 and 29 are used to discharge the chopped crop 30 to the left or right as required (as viewed from the open mouth 18 of the hopper 10). Each discharge outlet 28, 29 may be fitted with a plate 45 to close off a preselected discharge outlet 28, 29 as required. Each discharge outlet 28, 29 may also be fitted with an adjustable end piece 31 which is used to direct the discharge of the material 30 into a container 32.

Each discharge outlet 28, 29 is detachably fitted to the hopper 10 in any conventional manner, so as to facilitate easy removal of the discharge outlets 28, 29 for cleaning purposes.

The apparatus 500 is also provided with a discharge mechanism located intermediate the disc 22 and the base 21. The discharge mechanism comprises three flat members 35 extending at an angle from the disc 22 of the chopping mechanism adjacent the base 19, the flat members 35 welded or bolted onto the disc 22. Each flat member 35 extends non-perpendicularly from the disc 22 in the direction of the base 21. In addition each flat member 35 extends in length from adjacent the centre of the disc 22 to its periphery and is radially offset away from the direction of rotation of the chopping mechanism to permit the chopped crop 30 to be swept out the preselected discharge outlet 28 or 29.

The outer surface of the base wall 21 is provided with steel members 36, 37 and 38. Two members 36 and 38, which are of box-section, are each provided with aligned holes 39 in their opposed walls. The lift links 13 on the rear of a tractor 11 are connected to the members 36 and 38, with pivot pins (not shown) connecting the lift links 13 to the aligned holes 39. The centre member 37, which is an open channel member, is provided with aligned holes 41 in the opposed walls of the centre channel member 37. A hydraulic ram 12 is operatively connected to the centre channel member 37, with a pivot pin (not shown) connecting the ram 12 to the aligned holes 41. The members 36, 37 and 38 effectively act as brackets to connect the base 21 of the hopper 10 to the hydraulic ram 12 and the lift links 13 of the tractor 11. A reinforcing box-section member 42 is provided across the base 21 and serves in use to strengthen the hopper 10.

In operation, the apparatus 500 is moved under the influence of the hydraulic ram 12 so that the wall 15 of the hopper 10 is close to and parallel to the ground in a "shovel" configuration, as illustrated in Figure 1 (full line). When the apparatus 500 is reversed into a heap of root crop 33, an amount of the root crop 33 is "shovelled" into the hopper 10. The apparatus 500 is then pivoted through approximately 35-45° to an operative position, as illustrated in Figure 1 (broken line).

The drive to the shaft 20 is actuated and, as the disc 22 rotates with the shaft 20, the cutting edges 26 act to cut or chop small pieces off the root crop 33 in the hopper 10 in contact with the disc 22. The small pieces chopped from the root crop 33 in the hopper 10 pass through the apertures 24 into the base 19. The flat members 35 on the rotating disc 22 act to sweep the chopped crop 30 out at least one preselected discharge outlet 28 or 29, where the chopped crop 30 is collected or allowed to fall to the ground.

When feeding in passageways where there is no solid wall to stop the material from blowing away, it would be advisable to fit the discharge outlets 28, 29 with a vertical damper (not shown) to reduce the draft, so that the chopped crop 30 would be directed to the required location.

The discharge outlets 28, 29 in use can discharge fodder over the side of a circular feeder of at least four feet height or into a trailer. When feeding cattle or sheep in the field, this offers the advantage of being able to discharge feedstuff over a fence or hedge, thereby eliminating danger of injury to livestock, since animals crowding around a fodder feeder can occasionally suffer mouth injuries by colliding with the fodder feeder.

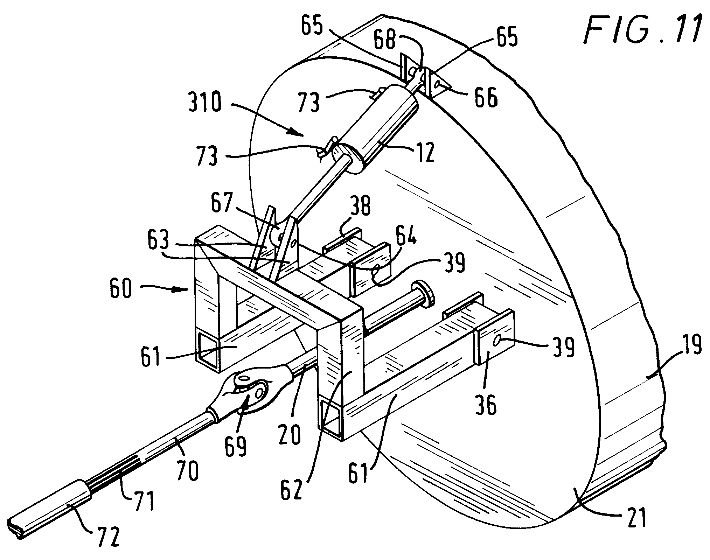

Referring now to Figure 11 of the accompanying drawings, there is illustrated a device 60 for attaching the apparatus 500 to the conventional three point linkage of the tractor 11. The device 60 comprises two steel sleeves 61 of box section, each sleeve 61 being dimensioned to fit over a lift link 13. A bridge member 62 extends between the sleeves 61, the bridge member 62 being adapted to engage the hydraulic ram 12 of the three point linkage. The sleeves 61 of the device 60 are attached to the steel members 36, 38 of a hopper 310 (similar to the hopper 10) by a coupling pin or the like, which is inserted through the aligned holes 39 of the steel members 36, 38 and corresponding holes in the sleeves 61 (not shown). The bridge member 62 is provided with two upright bracket plates 63 having a pivot pin 64 extending therebetween. The hopper 310 is also provided with two second upright bracket plates 65 having a second pivot pin 66 therebetween. The hydraulic ram 12 has eyes 67, 68, one at each end of the hydraulic ram 12. The hydraulic ram 12 is connected between the device 60 and the hopper 310 by inserting the pivot pins 64 and 66 through the respective upright bracket plates 63 and 65 and through the respective eyes 67 and 68 of the hydraulic ram 12. The shaft 20 is operatively connected to a drive shaft 70 by a universal joint 69 and the drive shaft 70 is in turn operatively connected to the power take off. The drive shaft 70 has a spline 71 and a collar 72 arrangement to permit axial movement of the drive shaft 70. The device 60 leads to fewer problems with certain makes of tractors where, when the lift links 13 are fully raised, the hydraulic ram anchor points can foul and thereby damage the hydraulic ram 12. The device 60 simplifies attachment of a mounted implement such as the apparatus 500 to the tractor 11 - the implement being connected to the tractor 11 by reversing the tractor lift links 13 into the sleeves 61 of the device 60. In order to render the connection between the tractor 11 and the implement fully operative, one is then obliged to simply manually connect the hydraulic hoses 73 and the power take off. Each lift link 13 may be fixed in position in the respective sleeve 61 by means of a spring-loaded clip or a coupling pin (not shown).

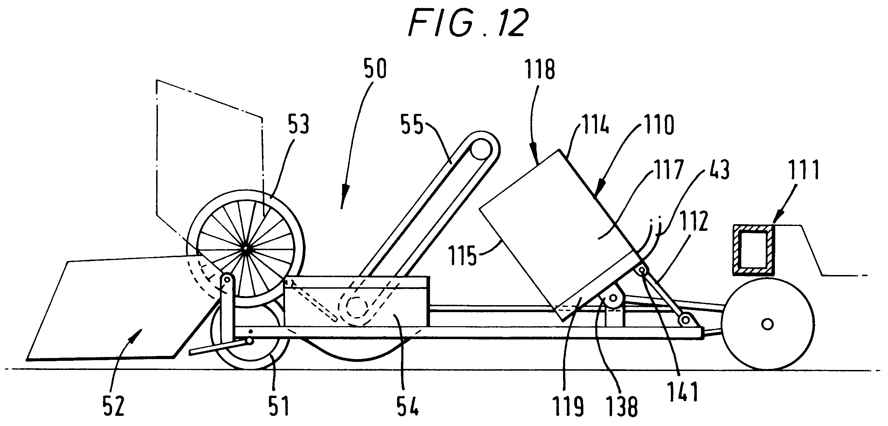

Referring now to Figure 12 of the accompanying drawings, there is illustrated a cleaning/chopping assembly generally indicated at 50 incorporating the apparatus 500 of the invention. The assembly 50 is trailed from a tractor 11 and has two pneumatic tyres 51. A loading hopper 52, operated by a hydraulic ram 12, is lowered and reversed into the root crop 33. The loading hopper 52 is then raised by the ram 12 and discharged onto a cleaning wheel 53. The root crop 33 is then transferred into a water bath 54, which contains a slow revolving auger (not shown) to remove dirt from the water bath 54. Fresh water is supplied to the water bath 54 from a water tank (not shown) mounted on the chassis of the root chopper. An elevator 55 is arranged to transfer the cleaned root crop 33 to the open mouth 118 of the hopper 310 (equivalent in construction to the hopper 10) and the root crop 33 is then chopped as described hereinabove. The elevator 55 may also be swung out so that the cleaned unchopped root crop 33 may be loaded onto a trailer (not shown).

The cleaning/chopping assembly 50 has the advantage of being operated by a single tractor 11 whereas a conventional cleaning/chopping assembly would be operated by up to three tractors, namely, a first tractor to operate a root chopper, a second tractor and loader to load the root crop onto a cleaner and a third tractor to drive the cleaner.

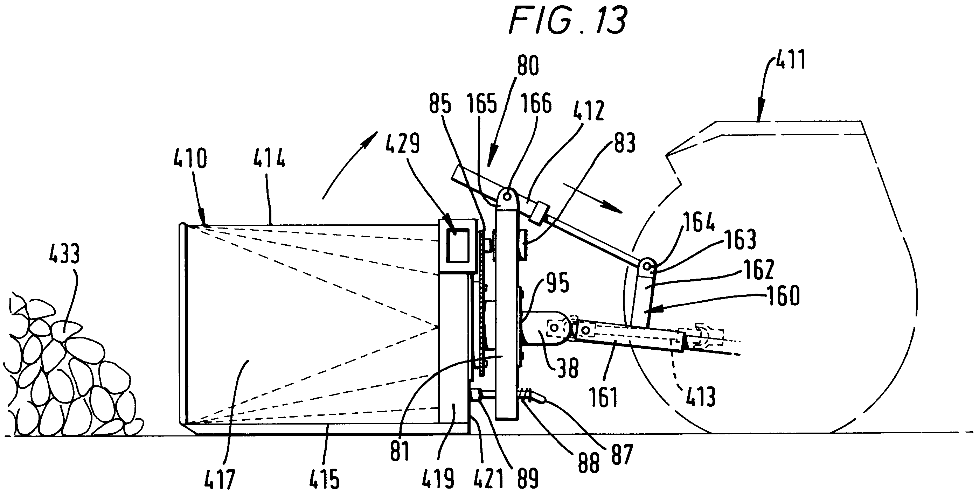

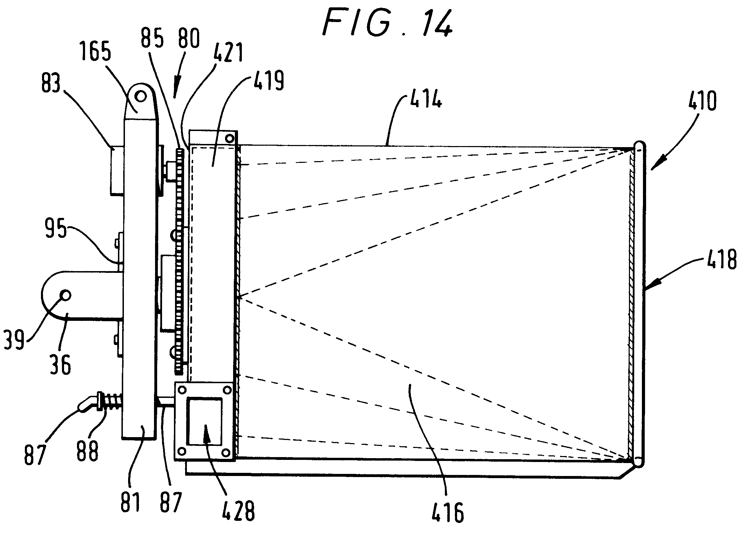

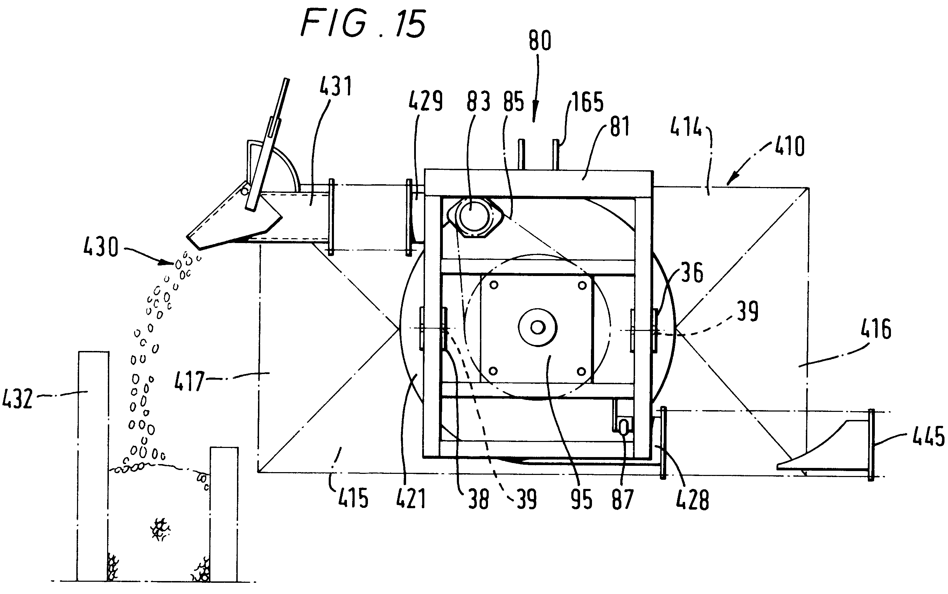

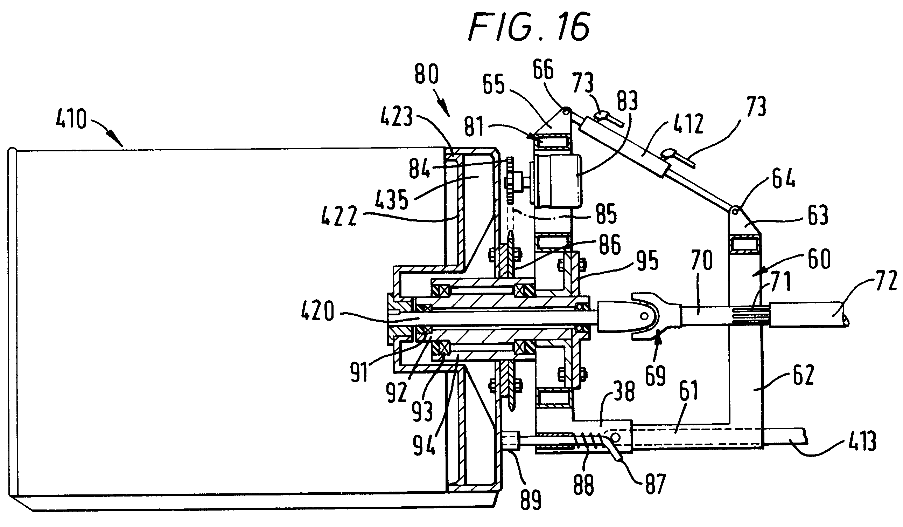

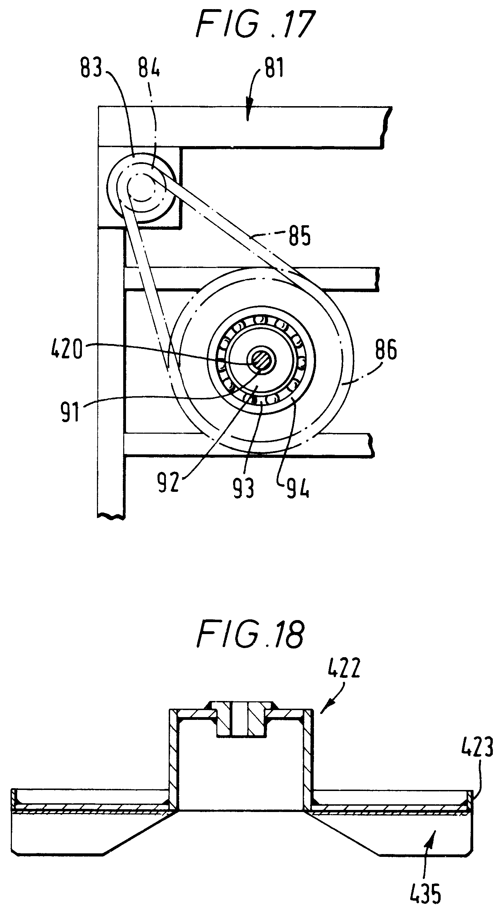

Referring now to Figures 13 to 18 of the accompanying drawings, there is illustrated a variation 80 of the apparatus 500. The variation or apparatus 80 comprises a hopper 410 which is rotatable relative to a support member 81. One end of the hydraulic ram 412 is pivotally connected by the second pivot pin 166 to the second upright bracket plates 165 mounted on the support member 81 in this embodiment and the other end of the hydraulic ram 412 is pivotable about the pivot pin 164 of the device 160 similar to the device 60 of Figure 11 of the drawings. The lift links 413 are positioned in the sleeves 161 of the device 160 and the sleeves 161 of the device 160 are pivotally connected in any conventional manner to the steel members 36, 38 which are mounted on the support member 81 in this embodiment.

A drive motor 83 is mounted on the support member 81. The drive motor 83, when actuated, drives a driven sprocket 86, via a drive sprocket 84 and a drive chain 85.

First ball bearings are located in a first bearing race 91 on the shaft 420 (equivalent to the shaft 20) to facilitate rotatable movement of the shaft 420 within a first sleeve 92. One end of the first sleeve 92 is fixedly connected to the support member 81 by a reinforcing member 95 which is bolted onto the support member 81. Second ball bearings are located in a second bearing race 93 on the first sleeve 92 to facilitate rotatable movement of a second sleeve 94 about the first sleeve 92. The second sleeve 94 is fixedly connected to the driven sprocket 86 which, in turn, is bolted onto the hopper 410.

The support member 81 is provided with a rod 87 having a spring 88 coiled therearound. A flange 89, aligned with the rod 87, is mounted on the hopper 410.

The root crop 33 may be cleaned by rotating the hopper 410 containing the root crop 33 and water about the shaft 420 in the following manner. The rod 87 is disengaged from the flange 89 to permit rotatable movement of the hopper 410 relative to the support member 81. When the drive motor 83 is then actuated, the drive motor 83 causes the driven sprocket 86 and, therefore, the second sleeve 94 and the hopper 410, to rotate about the shaft 420 so as to clean the root crop 33. Dirty water is then discharged through at least one preselected discharge outlet 428 or 429. If described, the shaft 420 and hence the disc 22 could rotate in unison with the hopper 410 or in a direction opposite to the direction of rotation of the hopper 410. In addition, the internal walls of the first compartment may be provided with paddles to facilitate mixing of material.

When the root crop 33 is to be chopped, the drive motor 83 is disengaged and the rod 87 is located in the flange 89. This prevents rotation of the hopper 410 relative to the support member 81 and permits the shaft 420 to rotate independently of the hopper 410 within the first sleeve 92.

The hopper 410 could also be driven off the shaft by providing a sliding clutch on the splines of that shaft which would disengage the drive to the disc 22 and engage the drive to the sprocket so as to rotate the hopper 410 or, alternatively, a separate shaft with splines could be mounted adjacent the shaft 420, the separate shaft having a chain and sprockets attached, to rotate the hopper 410. In the latter event, the power take off shaft would have to be detached from the shaft 420 and mounted on the aforementioned separate shaft.

The hopper 410 may be formed from sheet metal or slatted bars. Sheet metal is preferred due to the inevitable loss of chopped crop 30 from a slatted bar construction of hopper 410 during the chopping operation.

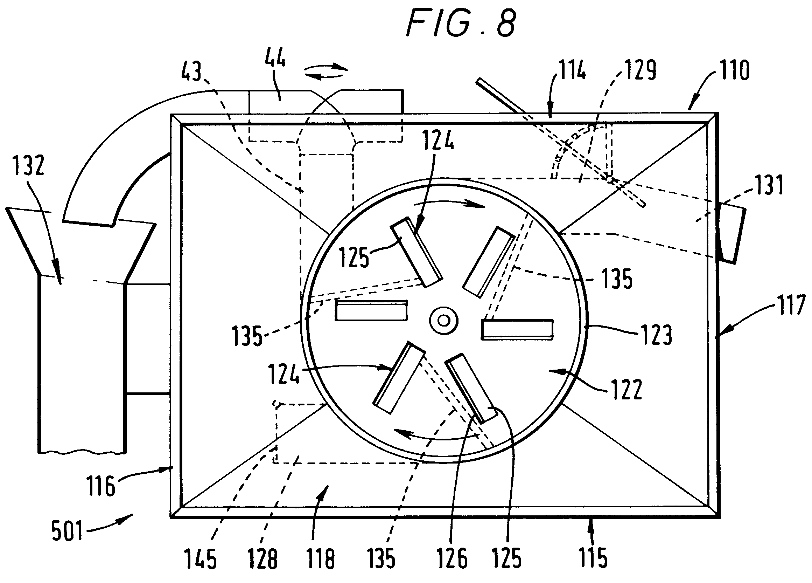

Referring now to Figure 8 of the accompanying drawings, there is illustrated a second embodiment of an apparatus 501 according to the invention. The numerals on this embodiment represent components having equivalent components in Figures 1-7 of the drawings except that the component numerals are preceded by the digit '1'. The apparatus 501 is provided with a third discharge outlet 43 which extends substantially vertically. The free end of the discharge outlet 43 is fitted with a rotatable end member 44 so as to direct the discharge of the chopped crop 130 to the left or right (as seen from the open mouth 118 of the hopper 110). The three flat members 135 differ from the flat members 35 in the first embodiment of the apparatus 500 by their location, namely, the flat members 135 extend from the periphery of the disc 22 inwardly and are radially offset from the direction of rotation of the disc 22 at a greater angle than that of the flat members 35 of the apparatus 500. The apparatus 501 may be provided with an agitator or auger (not shown) to cause the root crop 133 to be moved towards the knives 125. Such an auger would serve to reduce bridging of materials so as to assist in providing an even feed of root crop 133 to the knives 125.

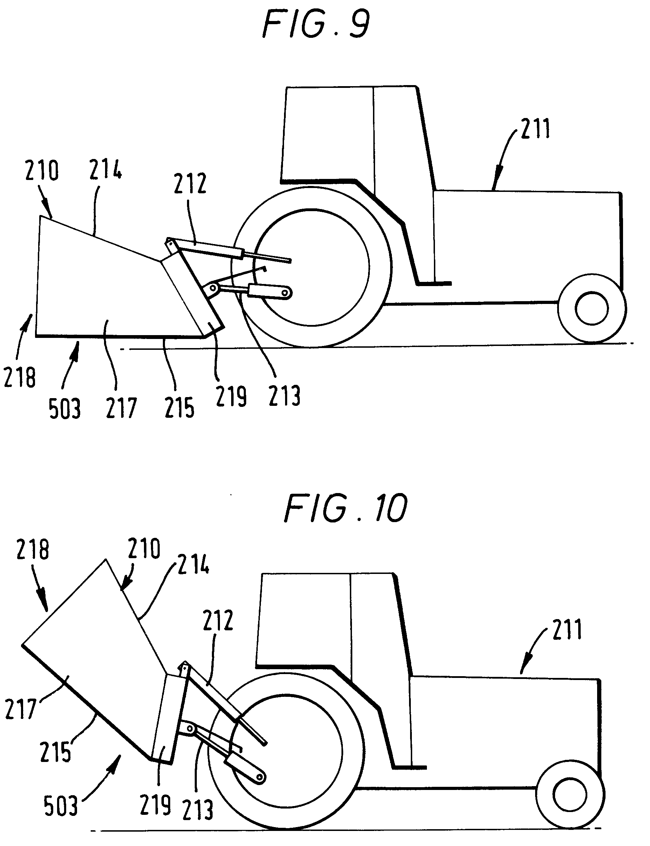

Referring now to Figures 9 and 10 of the accompanying drawings, there is illustrated a third embodiment of an apparatus 503 according to the invention having a hopper 210, in which the base 221 is at an angle of 60° to the second wall 215 of the hopper 210. Thus, in an operative position as illustrated in Figure 10 of the accompanying drawings, the base wall 221 is substantially vertical and the second wall 215 is sloped downwards so as to allow the root crop 233 to roll down towards the disc 22.

The invention has the advantage of providing an apparatus which may be used for the purpose of washing, dispensing, chopping or mixing material. When used for washing purposes, the housing and disc rotate in unison. When used for chopping, the disc rotates relative to the housing. When mixing, the housing and disc rotate in unison and, if desired, the apertures in the disc may be occluded. Any material which passes through the aperture during any of the modes of operation of the apparatus may be dispensed.

The apparatus according to the invention may be powered in any suitable fashion, particularly from the power take-off of a tractor.

When used for mixing purposes, the rate of rotation of the hopper and the disc may be relatively slow thereby permitting the apparatus according to the invention to be used for the purposes of mixing cement and the like.

The features disclosed in the foregoing description, in the following claims are material for realising the invention in diverse forms thereof.

## Claims

1. An apparatus for washing or chopping or mixing or dispensing material which comprises a housing (10) having a mouth (18), side wall(s) (14 to 17) and a base (21), a substantially circular floor (22) mounted in the housing in substantially parallel spaced apart relationship relative to the base (21) and which compartmentalises the housing into a first chamber located between the floor (22) and the mouth (18) of the housing and a second chamber (19) located between the base (21) and the floor (22), means for rotating the floor (22) relative to the housing (10) about an axis substantially perpendicular to the base (21), at least one aperture (24) in the floor (22) for enabling material to move from the first chamber to the second chamber (19), the at least one aperture (24) having an associated cutting edge (26) so that upon rotation of the floor (22) the material is subject to a cutting action when moving from the first chamber to the second chamber (19), at least one discharge outlet (29) from the second chamber (19) for enabling the material to exit the second chamber, and discharge means (35) for urging material from the second chamber (19) through the discharge outlet (29), characterised in that the second compartment (19) is substantially circular and the at least one discharge outlet (29) extends substantially tangentially from the second chamber (19) in the direction of rotation of the floor (22).

2. An apparatus as claimed in claim 1, wherein the apparatus has means (38, 39, 41) for mounting on mobile agricultural machinery such that the housing (10) may be lowered between a first position wherein the mouth (18) is close to the ground so that the housing may act as a shovel, and raised to a second, operative position wherein the mouth (18) is raised away from the ground.

3. An apparatus as claimed in claim 1 or 2, wherein each flat member (35) extends from adjacent the centre of the circular floor 22, to its periphery, and the inner end of the flat member is radially offset from the centre of the floor.

4. An apparatus as claimed in claim 1, 2 or 3, wherein the housing (10) is also mounted for rotation and the floor (22) is rotatable within and independently of the housing.

## Patentansprüche

1. Vorrichtung zum Reinigen oder Hacken oder Mischen oder Verteilen von Material, umfassend ein Gehäuse (10) mit einem Maul (18), Seitenwand/Seitenwänden (14 bis 17) und einem Unterteil (21), einen im wesentlichen kreisförmigen Boden (22), der in im wesentlichen parallel mit Zwischenraum angeordneter Beziehung im Verhältnis zum Unterteil (21) im Gehäuse montiert ist, der das Gehäuse in eine erste, zwischen dem Boden (22) und dem Maul (18) des Gehäuses befindliche Kammer und eine zweite, zwischen dem Unterteil (21) und dem Boden (22) befindliche Kammer (19) unterteilt, Mittel zum Drehen des Bodens (22) im Verhältnis zum Gehäuse (10) um eine im wesentlichen senkrecht zum Unterteil (21) liegende Achse, mindestens eine Öffnung (24) im Boden (22), damit sich Material aus der ersten Kammer in die zweite Kammer (19) bewegen kann, wobei die mindestens eine Öffnung (24) eine zugeordnete Schneidkante (26) hat, so daß das Material bei der Drehung des Bodens (22) einer Schneidwirkung ausgesetzt wird, wenn es sich aus der ersten Kammer in die zweite Kammer (19) bewegt, mindestens einen Austragsauslaß (29) von der zweiten Kammer (19), damit Material die zweite Kammer verlassen kann, und Austragsmittel (35) zum Herausdrücken von Material aus der zweiten Kammer (19) durch den Austragsauslaß (29), dadurch gekennzeichnet, daß das zweite Fach (19) im wesentlichen kreisförmig ist und der mindestens eine Austragsauslaß (29) in der Drehrichtung des Bodens (22) im wesentlichen tangential von der zweiten Kammer (19) verläuft.

2. Vorrichtung nach Anspruch 1, wobei die Vorrichtung Mittel (38, 39, 41) zum Montieren auf fahrbaren landwirtschaftlichen Maschinen hat, so daß das Gehäuse (10) auf eine erste Position, in der das Maul (18) nahe am Boden ist, so daß das Gehäuse als eine Schaufel dienen kann, gesenkt und auf eine zweite Betriebsposition angehoben werden kann, in der das Maul (18) vom Boden abgehoben wird.

3. Vorrichtung nach Anspruch 1 oder 2, wobei jedes flache Element (35) von einem an die Mitte des kreisförmigen Bodens 22 angrenzenden Punkt zu ihrem Umfang verläuft und das innere Ende des flachen Elements radial von der Mitte des Bodens versetzt ist.

4. Vorrichtung nach Anspruch 1, 2 oder 3, wobei das Gehäuse (10) auch zum Drehen montiert ist und der Boden (22) innerhalb des Gehäuses und unabhängig von diesem drehbar ist.

## Revendications

1. Appareil pour laver ou hacher ou mélanger ou distribuer de la matière qui comprend un logement (10) ayant une gueule (18), une (des) paroi(s) latérale(s) (14 à 17) et une base (21), un plancher sensiblement circulaire (22) monté dans le logement en une relation espacée sensiblement parallèle par rapport à la base (21) et qui compartimente le logement en une première chambre située entre le plancher (22) et la gueule (18) du logement et une deuxième chambre (19) située entre la base (21) et le plancher (22), un moyen pour tourner le plancher (22) par rapport au logement (10) autour d'un axe sensiblement perpendiculaire à la base (21), au moins une ouverture (24) dans le plancher (22) pour permettre à la matière de passer de la première chambre à la deuxième chambre (19), la au moins une ouverture (24) ayant une arête de coupe associée (26) de telle sorte qu'à la rotation du plancher (22) la matière est soumise à une action de coupe lorsqu'elle passe de la première chambre à la deuxième chambre (19), au moins une sortie de décharge (29) à partir de la deuxième chambre (19) pour permettre à la matière de sortir de la deuxième chambre, et un moyen de décharge (35) pour pousser la matière à partir de la deuxième chambre (19) à travers la sortie de décharge (29), caractérisé en ce que le deuxième compartiment (19) est sensiblement circulaire et la au moins une sortie de décharge (29) s'étend sensiblement tangentiellement à partir de la deuxième chambre (19) dans le sens de rotation du plancher (22).

2. Appareil conformément à la revendication 1, dans lequel l'appareil a un moyen (38, 39, 41) pour le montage sur une machine agricole mobile de telle sorte que le logement (10) puisse être abaissé entre une première position où la gueule (18) est proche du sol de façon à ce que le logement puisse servir de pelle, et levé à une deuxième position de fonctionnement où la gueule (18) est élevée du sol.

3. Appareil conformément à la revendication 1 ou 2, dans lequel chaque membre plat (35) s'étend depuis une position adjacente au centre du plancher circulaire 22, jusqu'à sa périphérie, et l'extrémité interne du membre plat est décalée radialement par rapport au centre du plancher.

4. Appareil conformément à la revendication 1, 2 ou 3, dans lequel le logement (10) est aussi monté pour pouvoir tourner et le plancher (22) est rotatif à l'intérieur et indépendamment du logement.
